# FASCICULE DE BREVET EUROPEEN

(11) **EP 2 370 619 B1**
(45) Date de publication et mention de la délivrance du brevet: **31.01.2018**
(21) Numéro de dépôt: 09806099.9
(22) Date de dépôt: 22.12.2009
(51) Int. Cl.: D01F 1/09, D01F 6/66

(54) **FIBRE COMPOSITE A BASE DE PEKK, SON PROCEDE DE FABRICATION ET SES UTILISATIONS**
VERBUNDFASERN AUS PEKK, VERFAHREN ZUR HERSTELLUNG, UND VERWENDUNG DESSELBEN
PEKK COMPOSITE FIBRE, ITS METHOD OF PRODUCTION, AND ITS USES

(30) Priorité: 26.12.2008 FR 0859090
(43) Date de publication de la demande: 05.10.2011
(73) Titulaire: Arkema France, 92700 Colombes (FR)
(72) Inventeur: COLLETTE, Christian, F-92160 Antony (FR); POULIN, Philippe, F-33400 Talence (FR)
(86) Numéro de dépôt international: PCT/FR2009/052665
(87) Numéro de publication internationale: WO 2010/072975

(56) Documents cités:
- WO-A-2008/091383
- JP-A- 2006 342 471
- J. SANDLER, H. WINDLE, P. WERNER, V. ALSTÄDT, M. VAN ES, M.S.P. SHAFFER: "Carbon-nanofibre-reinforced poly(ether ether ketone) fibres" JOURNAL OF MATERIALS SCIENCE, vol. 38, no. 10, 1 mai 2003 (2003-05-01), pages 2135-2141, XP002544990
- XUSHAN G ET AL: "APPLICATION OF MULTI-WALL CARBON NANOTUBES IN POLYMER FIBERS" CHEMICAL FIBERS INTERNATIONAL, IBP PRESS, FRANKFURT AM MAIN, DE, vol. 55, no. 3, 2 juin 2005 (2005-06-02), pages 170-172, XP001230665 ISSN: 0340-3343
- SUNDARAY BIBEKANANDA ET AL: "Electrical conductivity of a single electrospun fiber of poly(methyl methacrylate) and multiwalled carbon nanotube nanocomposite" APPLIED PHYSICS LETTERS, AIP, AMERICAN INSTITUTE OF PHYSICS, MELVILLE, NY, US LNKD- DOI:10.1063/1.2193462, vol. 88, no. 14, 5 avril 2006 (2006-04-05) , pages 143114-143114, XP012080989 ISSN: 0003-6951

## Description

La présente invention concerne une fibre composite, notamment conductrice, constituée d'une matrice polymérique thermoplastique comprenant une polyéthercétonecétone (PEKK), dans laquelle sont dispersés des nanotubes multiparois, notamment de carbone. Elle concerne également un procédé de fabrication de cette fibre composite, ainsi que ses utilisations.

On a recours, pour la fabrication de textiles chauffants tels que des vêtements, couvertures, sièges automobiles ou garnitures protectrices du froid (destinées par exemple à protéger des cuves de fuel) à des fibres conductrices susceptibles de laisser circuler le courant électrique en leur sein et de générer, par effet Joule, de la chaleur.

Les fibres conductrices trouvent également un intérêt dans des applications où l'effet chauffant n'est pas recherché, pour leurs propriétés antistatiques, en particulier dans la fabrication de pièces aéronautiques ou automobiles ou pour le blindage électromagnétique d'équipements électroniques, par exemple pour dissiper les charges électriques issues de frottements, induites en particulier lors de la circulation d'un fluide dans une conduite thermoplastique.

Les fibres conductrices connues dans l'art antérieur comprennent :
- les fils métalliques, qui ont l'inconvénient d'être lourds et susceptibles de s'oxyder,
- les fibres de polymères intrinsèquement conducteurs, qui résistent mal aux lavages et sont peu stables, dans la mesure où ils sont sensibles à l'oxydation et également à la chaleur dégagée par effet Joule qui peut dégrader chimiquement (par exemple réticuler) le polymère et/ou altérer ses propriétés mécaniques au-delà d'une certaine température,
- les fibres de polymères rendus conducteurs par dépôt de particules conductrices à leur surface, telles que les fibres argentées, dont le revêtement est susceptible de se dégrader par frottement et usure, et
- de fibres de polymères chargés en leur sein de particules conductrices, à base de carbone ou de métaux.

Dans cette dernière catégorie de fibres conductrices, on peut citer les matrices polymères renforcées par des nanotubes de carbone, telles que décrites dans le brevet US-6,331,265 de la Demanderesse. Ce brevet divulgue ainsi diverses matrices polymères, notamment à base de polyétheréthercétone (ou PEEK), mais préférentiellement à base de polyoléfines, qui sont renforcées par des nanotubes de carbone selon un procédé permettant d'optimiser les propriétés mécaniques de la fibre, les propriétés de conduction électrique n'étant pas particulièrement recherchées. Il est connu de la demande JP2006342471 A un procédé de fabrication d'une fibre composite électroconductrice comprenant des nanotubes de carbone multiparois dispersées dans une matrice d'un polyamide entièrement aromatique.

Or, il est apparu à la Demanderesse que certains matériaux composites à base d'un autre type de polyéthercétone, à savoir une polyéthercétonecétone (ou PEKK), et de nanotubes multiparois - notamment de carbone
- présentaient non seulement de bonnes propriétés mécaniques (notamment module d'Young et résistance à la rupture), mais également des propriétés de conduction de l'électricité alliées à une très bonne stabilité thermique, leur permettant de véhiculer une grande densité de courant sans que la chaleur dégagée par effet Joule ne les détériore chimiquement de manière à altérer sensiblement leur aspect et/ou leurs propriétés mécaniques. Ces matériaux composites présentent également une bonne aptitude au filage par voie fondue. Cette combinaison de propriétés rend ces matériaux bien adaptés à la fabrication de fibres conductrices pour la fabrication de textiles chauffants ou d'autres matériaux conducteurs tels que décrits précédemment, en en particulier de matériaux antistatiques soumis à d'importantes contraintes thermiques et/ou mécaniques. Ils présentent en outre une biocompatibilité permettant d'envisager leur utilisation dans des applications biomédicales, notamment pour la réalisation de sutures.

Il est, certes, connu de la demande WO 2005/081781 de fabriquer des composites à base de polymères, tels que le PEEK ou le PEKK, et de nanotubes de carbone. Ces composites sont utilisés pour fabriquer des articles moulés destinés à l'emballage de composants électroniques ou à la réalisation de plaques bipolaires pour cellules électrochimiques. Il n'est toutefois pas envisagé d'en faire des fibres.

De même, la société OXFORD PERFORMANCE MATERIALS, INC. commercialise, sous les dénominations commerciales OXXPEKK®, différents grades de PEKK stables en température, dont certains (OXPEEK®-IG et OXPEEK®-MG grades 230C et 240C) sont renforcés par des fibres de verre ou de carbone. Ces composites ne sont toutefois pas transformables en fibres au sens de l'invention. En effet, compte tenu du diamètre (de l'ordre de 5 à 10 µm) des fibres de carbone, celles-ci sont difficiles à disperser de façon homogène dans les fibres composites et peuvent donc créer des défauts susceptibles d'obstruer les filtres ou orifices de filières utilisés dans la formation des fibres composites.

La présente invention a donc pour objet une fibre composite, notamment conductrice, constituée d'une matrice polymérique thermoplastique comprenant une polyéthercétonecétone (PEKK), dans laquelle sont dispersés des nanotubes multiparois, en particulier à base de carbone.

Par "fibre composite", on entend, au sens de la présente invention, une fibre constituée d'un brin dont le diamètre est compris entre 100 nm et 300 µm, de préférence entre 1 et 100 µm, mieux, entre 2 et 50 µm.

Par "PEKK", on entend dans le cadre de cette description un polymère comprenant, et de préférence constitué, de monomères répondant à la formule générale (A) suivante : 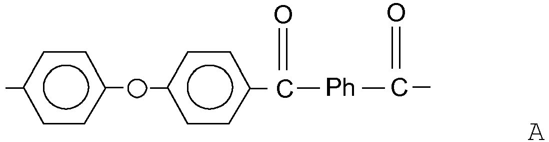 dans laquelle Ph représente un groupe 1,4-phénylène (auquel cas le motif -CO-Ph-CO- désigne un groupe téréphtalyle (T))) et/ou de monomères de formule (I) dans laquelle Ph représente un groupe 1, 3-phénylène (auquel cas le motif -CO-Ph-CO- désigne un groupe isophtalyle (I)). Les groupes phényle peuvent éventuellement être substitués par des groupements alkyle en C₁ à C₈.

Selon une forme d'exécution préférée de l'invention, le polymère comprend, et est avantageusement constitué, d'une combinaison des monomères précités. Dans ce cas, le rapport molaire (T)/(I) peut être compris entre 80:20 et 20:80, de préférence entre 60:40 et 50:50, bornes incluses.

Le PEKK utilisable selon l'invention peut être cristallin, semi-cristallin ou amorphe. On préfère toutefois utiliser un PEKK amorphe, qui permet d'obtenir une orientation plus favorable des chaînes polymères dans l'axe des fibres composites formées à partir du PEKK, et donc de meilleures propriétés mécaniques de ces fibres composites. On préfère par ailleurs que le PEKK présente une température de transition vitreuse (Tg) comprise entre 150 et 170°C (bornes comprises). Son point de fusion, lorsqu'il existe, peut par exemple être compris entre 280 et 400°C, de préférence entre 300 et 370°C, bornes incluses.

Des PEKK convenant à une utilisation dans la présente invention sont notamment disponibles auprès de la société OXFORD PERFORMANCE MATERIALS sous les dénominations commerciales OXPEKK®-SP, OXPEKK®-C et OXPEKK®-C-E.

Outre le PEKK ou le PAEK, la matrice polymérique utilisée selon l'invention peut par ailleurs contenir au moins un adjuvant choisi notamment parmi les plastifiants, les stabilisants anti-oxygène, les stabilisants à la lumière, les colorants, les agents anti-chocs, les agents antistatiques, les agents ignifugeants, les lubrifiants, et leurs mélanges, pour autant que ceux-ci ne nuisent pas à l'obtention d'une fibre conductrice. La matrice polymérique peut, en variante ou en plus, comprendre au moins un autre polymère thermoplastique compatible avec le PEKK ou rendu compatible avec celui-ci.

Le second constituant de la fibre composite selon l'invention est une dispersion de nanotubes multiparois, qui sont avantageusement constitués d'au moins un élément chimique choisi parmi les éléments des colonnes IIIa, IVa et Va du tableau périodique. Les nanotubes multiparois peuvent ainsi être à base de bore, de carbone, d'azote, de phosphore, de silicium ou de tungstène. Ils peuvent par exemple contenir, par exemple être constitués, de carbone, de nitrure de carbone, de nitrure de bore, de carbure de bore, de phosphure de bore, de nitrure de phosphore ou de boronitrure de carbone ou encore de silicium ou de tungstène.

L'avantage d'utiliser des nanotubes multiparois réside dans le fait que lorsqu'ils subissent un traitement de surface notamment en vue de faciliter leur mise en oeuvre ou leur compatibilité avec la matrice, ils conservent leurs propriétés conductrices contrairement aux nanotubes monoparois par suite de l'altération de leur surface.

Selon une forme d'exécution préférée de l'invention, on utilise des nanotubes multiparois de carbone (ou "NTC"). Il s'agit de fibrilles de carbone graphitique, creuses, comportant chacune plusieurs parois tubulaires graphitiques orientées selon l'axe de la fibrille. Les nanotubes multiparois à parois multiples peuvent être préparés selon un procédé de dépôt chimique en phase vapeur (ou CVD pour "Chemical Vapour Déposition"). Les nanotubes multiparois peuvent par exemple comprendre de 3 à 15 feuillets et plus préférentiellement de 3 à 10 feuillets.

Les nanotubes multiparois auquels s'appliquent l'invention ont un diamètre moyen allant de 3 à 100 nm, plus préférentiellement de 4 à 50 nm et, mieux, de 4 à 30 nm et avantageusement une longueur de 0,1 à 10 µm. Leur rapport longueur/diamètre est de préférence supérieur à 10 et le plus souvent supérieur à 100 voire supérieur à 1000. Les nanotubes multiparois se différencient ainsi des fibres de carbone qui sont plus longues et de plus grand diamètre et se prêtent donc moins bien aux techniques classiques d'extrusion de matériaux thermoplastiques que les nanotubes multiparois.

Leur surface spécifique est par exemple comprise entre 100 et 500 m²/g (bornes comprises), généralement entre 100 et 300 m²/g pour les nanotubes multiparois. Leur densité apparente peut notamment être comprise entre 0,05 et 0,5 g/cm³ (bornes comprises) et plus préférentiellement entre 0,1 et 0,2 g/cm³ (bornes comprises).

Un exemple de nanotubes multiparois de carbone mutiparois bruts est notamment disponible dans le commerce auprès de la société ARKEMA France sous la dénomination commerciale Graphistrength® C100.

Ces nanotubes multiparois peuvent être purifiés et/ou traités (par exemple oxydés) et/ou broyés et/ou fonctionnalisés, avant leur mise en oeuvre dans le procédé selon l'invention.

Le broyage des nanotubes multiparois peut être notamment effectué à froid ou à chaud et être réalisé selon les techniques connues mises en oeuvre dans des appareils tels que broyeurs à boulets, à marteaux, à meules, à couteaux, à jet de gaz ou tout autre système de broyage susceptible de réduire la taille du réseau enchevêtré de nanotubes multiparois. On préfère que cette étape de broyage soit pratiquée selon une technique de broyage par jet de gaz et en particulier dans un broyeur à jet d'air.

La purification des nanotubes multiparois bruts ou broyés peut être réalisée par lavage à l'aide d'une solution d'acide sulfurique, de manière à les débarrasser d'éventuelles impuretés minérales et métalliques résiduelles, provenant de leur procédé de préparation. Le rapport pondéral des nanotubes multiparois à l'acide sulfurique peut notamment être compris entre 1 :2 et 1 :3 (bornes incluses). L'opération de purification peut par ailleurs être effectuée à une température allant de 90 à 120°C, par exemple pendant une durée de 5 à 10 heures. Cette opération peut avantageusement être suivie d'étapes de rinçage à l'eau et de séchage des nanotubes multiparois purifiés.

L'oxydation des nanotubes multiparois est avantageusement réalisée en mettant ceux-ci en contact avec une solution d'hypochlorite de sodium renfermant de 0,5 à 15% en poids de NaOCl et de préférence de 1 à 10% en poids de NaOCl, par exemple dans un rapport pondéral des nanotubes multiparois à l'hypochlorite de sodium allant de 1:0,1 à 1:1. L'oxydation est avantageusement réalisée à une température inférieure à 60°C et de préférence à température ambiante, pendant une durée allant de quelques minutes à 24 heures. Cette opération d'oxydation peut avantageusement être suivie d'étapes de filtration et/ou centrifugation, lavage et séchage des nanotubes multiparois oxydés.

La fonctionnalisation des nanotubes multiparois peut être réalisée par greffage de motifs réactifs tels que des monomères vinyliques à la surface des nanotubes multiparois. Le matériau constitutif des nanotubes multiparois est utilisé comme initiateur de polymérisation radicalaire après avoir été soumis à un traitement thermique à plus de 900°C, en milieu anhydre et dépourvu d'oxygène, qui est destiné à éliminer les groupes oxygénés de sa surface.

Afin d'éliminer les résidus métalliques de catalyseur, il est également possible de soumettre les nanotubes multiparois à un traitement thermique d'au moins 1000°C, par exemple de 1200°C.

On utilise notamment dans la présente invention des nanotubes multiparois bruts éventuellement broyés, c'est-à-dire des nanotubes multiparois qui ne sont ni volontairement oxydés, ni purifiés, ni fonctionnalisés, et qui n'ont subi aucun autre traitement chimique.

Le traitement ou non (chimique ou recuit) des nanotubes multiparois est fonction de l'utilisation finale du matériau thermoplastique renforcé par les fibres.

Les nanotubes multiparois peuvent représenter de 0,1 à 50% en poids, et de préférence de 1 à 10% en poids, par rapport au poids de la fibre composite selon l'invention.

La présente invention a également pour objet un procédé de fabrication de la fibre composite à base de PEKK décrite précédemment, comprenant les étapes successives consistant à :
(a) disperser les nanotubes multiparois, éventuellement sous forme de mélange-maître dans une partie de la matrice polymère, dans tout ou l'autre partie de la matrice polymère, pour obtenir un mélange composite,
(b) transformer ledit mélange composite en fibres.

L'étape (a), qui consiste à mélanger les nanotubes multiparois au PEKK, peut être conduite dans un appareillage quelconque. On préfère que les nanotubes multiparois et le polymère thermoplastique soient mélangés par compoundage à l'aide de dispositifs usuels tels que des extrudeuses bi-vis ou des co-malaxeurs. Ils peuvent être introduits simultanément ou en des endroits différents de l'extrudeuse. Dans ce procédé, des granulés ou de la poudre de polymère sont typiquement mélangés à l'état fondu avec les nanotubes multiparois.

En variante, les nanotubes multiparois peuvent être dispersés par tout moyen approprié dans le polymère thermoplastique se trouvant en solution dans un solvant. Dans ce cas, la dispersion peut être améliorée, selon une forme d'exécution avantageuse de la présente invention, par l'utilisation de systèmes de dispersion (tels que des ultrasons ou un système rotor-stator) ou encore à l'aide d'agents dispersants particuliers.

Les agents dispersants peuvent être notamment choisis parmi les plastifiants, en particulier le poly(butylène téréphtalate) cyclisé et les mélanges en contenant, tels que la résine CBT® 100 commercialisée par CYCLICS CORPORATION. En variante, l'agent dispersant peut être un copolymère comprenant au moins un monomère hydrophile anionique et au moins un monomère incluant au moins un cycle aromatique, tels que les copolymères décrits dans le document FR-2 766 106, le rapport en poids de l'agent dispersant aux nanotubes multiparois allant de préférence de 0,6:1 à 1,9:1. Dans une autre forme d'exécution encore, l'agent dispersant peut être un homo- ou un copolymère de vinylpyrrolidone, le rapport en poids des nanotubes multiparois à l'agent dispersant allant dans ce cas de préférence de 0,1 à moins de 2. D'une manière générale, l'agent dispersant peut également être sélectionné parmi les molécules ou macromolécules synthétiques ou naturelles, à caractère amphiphile, telles que les tensioactifs, présentant une affinité à la fois avec le milieu de dispersion et avec les nanotubes multiparois.

Dans un mode préféré de réalisation de l'invention, les nanotubes multiparois utilisés dans l'étape (a) se trouvent sous forme de mélange-maître avec une partie de la matrice polymère et sont dilués, dans l'étape (a) avec le reste de la matrice polymère et le plastifiant tel que la résine CBT® 100 commercialisée par CYCLICS CORPORATION dont la concentration dépendra du taux de nanotubes multiparois. Dans ce mode de réalisation, les nanotubes multiparois peuvent représenter de 3% à 30% en poids, par rapport au poids du mélange-maître, et préférentiellement de 5% à 20%. Dans ce mode préféré, le choix de la matrice est préférentiellement le PEKK amorphe sous forme de poudre et le mélange avantageusement fait à l'aide d'un co-malaxeur type BUSS dans la configuration L/D entre 11 et 15.

Dans un deuxième mode préféré de l'invention le mélange maître constitué de PEKK amorphe, de nanotubes multiparois et de plastifiant sera utilisé pour des formulations à base de PEKK, PEEK ou tout autre PAEK cristallin contenant ou non des fibres (carbone, verre) voir d'autres charges minérales.

Le mélange composite résultant de l'étape (a) est ensuite transformé en fibres dans l'étape (b). La formation de ces fibres peut être avantageusement effectuée suivant un procédé de filage par voie fondue, de préférence par passage dans une extrudeuse pourvue d'une filière de faible diamètre. Il pourra être avantageux de conduire cette étape sous atmosphère inerte pour préserver la structure des nanotubes multiparois. Selon une autre variante, les fibres peuvent être obtenues suivant un procédé par voie solvant.

Le procédé selon l'invention peut en outre comprendre une étape supplémentaire (c) consistant à étirer les fibres obtenues, à une température supérieure à la température de transition vitreuse (Tg) du PEKK et de préférence inférieure à sa température de fusion (si elle existe). Une telle étape, décrite dans le brevet US-6,331,265, permet d'orienter les nanotubes multiparois et le polymère sensiblement dans la même direction, selon l'axe de la fibre, et d'améliorer ainsi les propriétés mécaniques de cette dernière, notamment son module de traction (module d'Young) et sa ténacité (seuil de rupture). Le rapport d'étirage, défini comme le rapport de la longueur de la fibre après étirage à sa longueur avant étirage, peut être compris entre 1 et 20, de préférence entre 1 et 10, bornes incluses. L'étirage peut se faire en une seule fois, ou en plusieurs fois en laissant la fibre relaxer légèrement entre chaque étirage. Cette étape d'étirage est de préférence conduite en faisant passer les fibres dans une série de rouleaux ayant des vitesses de rotation différentes, ceux qui déroulent la fibre tournant à plus faible vitesse que ceux qui la réceptionnent. Pour atteindre la température d'étirage voulue, on peut soit faire passer les fibres dans des fours disposés entre les rouleaux, soit utiliser des rouleaux chauffants, soit combiner ces deux techniques. Cette étape d'étirage est rendue plus aisée par l'utilisation de PEKK amorphe.

Cette étape d'étirage permet de consolider la fibre et d'atteindre des contraintes au seuil à la rupture élevées.

En outre, bien que les fibres composites obtenues selon ce procédé soient intrinsèquement conductrices, c'est-à-dire présentent une résistivité qui peut être inférieure à 10⁵ ohm.cm à température ambiante, leur conductivité électrique peut encore être améliorée par des traitements thermiques.

Enfin, ces fibres composites sont capables de supporter de fortes densités de courant sans que leurs propriétés mécaniques et leur aspect ne se trouvent sensiblement altérés, en raison, d'une part, de la bonne stabilité thermique du PEKK et, d'autre part, de la capacité des nanotubes multiparois à dissiper la chaleur.

Compte tenu des propriétés avantageuses décrites ci-dessus, les fibres composites selon l'invention peuvent être utilisées pour la fabrication de nez, d'ailes ou de carlingues de fusées ou d'avions ; d'armures de flexible off-shore ; d'éléments de carrosserie automobile ou de châssis moteur ; d'emballages et de textiles antistatiques, notamment pour la protection de silos ; de dispositifs de blindage électromagnétique, notamment pour la protection de composants électroniques ; de textiles chauffants ; de câbles conducteurs; de capteurs, notamment de capteurs de déformation ou de contraintes mécaniques ; ou de dispositifs biomédicaux tels que des fils de suture ou des cathéters.

L'invention a en particulier pour objet une pièce composite de structure mécanique contenant des fibres composites telles que décrites précédemment (à base de PEKK ou de PAEK).

La fabrication de ces pièces composites peut être réalisée suivant différents procédés, impliquant en général une étape d'imprégnation des fibres par une matrice polymérique. Cette étape d'imprégnation peut elle-même être effectuée suivant différentes techniques, en fonction notamment de la forme physique de la matrice utilisée (pulvérulente ou plus ou moins liquide). L'imprégnation des fibres est de préférence réalisée suivant un procédé d'imprégnation en lit fluidisé, dans lequel la matrice polymérique se trouve à l'état de poudre. Les fibres peuvent elles-mêmes être imprégnées telles quelles ou après une étape de tissage en un tissu constitué d'un réseau bidirectionnel de fibres.

Les fibres selon l'invention peuvent être introduites dans un matériau thermoplastique, un matériau élastomère ou un matériau thermodurcissable.

Ces semi-produits sont ensuite utilisés dans la fabrication de la pièce composite recherchée. Différents tissus de fibres pré-imprégnés, de composition identique ou différente, peuvent être empilés pour former une plaque ou un matériau stratifié, ou en variante soumis à un procédé de thermoformage. Dans tous les cas, la fabrication de la pièce finie comprend une étape de consolidation de la matrice polymérique, qui est par exemple fondue localement pour créer des zones de fixation des fibres entre elles.

En variante, il est possible de préparer un film à partir de la matrice d'imprégnation, notamment au moyen d'un procédé d'extrusion ou de calandrage, ledit film ayant par exemple une épaisseur d'environ 100 µm, puis de le placer entre deux mats de fibres, l'ensemble étant alors pressé à chaud pour permettre l'imprégnation des fibres et la fabrication du composite.

Dans ces procédés, la matrice d'imprégnation peut comprendre un polymère thermoplastique, élastomérique ou thermodurcissable ou un mélange de ceux-ci. Cette matrice polymère peut elle-même contenir une ou plusieurs charges ou fibres.

Par ailleurs, les fibres composites selon l'invention peuvent être tissées ou tricotées, seules ou avec d'autres fibres, ou être utilisées, seules ou en association avec d'autres fibres, pour la fabrication de feutres ou de matériaux non-tissés. Des exemples de matériaux constitutifs de ces autres fibres comprennent, sans limitation :
- les fibres de polymère étiré, à base notamment : de polyamide tel que le polyamide 6 (PA-6), le polyamide 11 (PA-11), le polyamide 12 (PA-12), le polyamide 6.6 (PA-6.6), le polyamide 4.6 (PA-4.6), le polyamide 6.10 (PA-6.10) ou le polyamide 6.12 (PA-6.12), de copolymère bloc polyamide/polyéther (Pebax®) , de polyéthylène haute densité, de polypropylène ou de polyester tel que les polyhydroxyalcanoates et les polyesters commercialisés par DU PONT sous la dénomination commerciale Hytrel® ;
- les fibres de carbone ;
- les fibres de verre, notamment de type E, R ou S2 ;
- les fibres d'aramide (Kevlar®) ;
- les fibres de bore ;
- les fibres de silice ;
- les fibres naturelles telles que le lin, le chanvre, le sisal le coton ou la laine ; et
- leurs mélanges, tels que les mélanges de fibres de verre, carbone et aramide.

### Exemple 1 :

On introduit dans une extrudeuse bi-vis (L/D= 40) chauffée à 380 °C le PEKK (96 % en poids), grade OXPEKK®-SP de la société OXFORD PERFORMANCE MATERIAL ainsi que les nanotubes de carbone multiparois Graphistrength® de la société Arkema (3 % en poids)et le plastifiant CBT® 100 (1 % en poids), à l'aide d'une trémie d'alimentation. Le jonc que l'on obtient en sortie de filière est refroidit dans un bac à eau puis granulé et séché.

### Exemple 2 :

On introduit les granulés obtenus dans l'exemple 1 dans une extrudeuse monovis (L/D= 16) chauffée à 390°C équipée avec une filière avec des trous de 0.5 mm. Les fibres obtenues sont étirées sur le banc d'étirage de telle sorte que le diamètre final s'établisse à 100µm, refroidies à l'air puis elles sont enroulées sur une bobine à l'aide d'un dispositif adapté.

## Revendications

1. Fibre composite notamment conductrice constituée d'une matrice polymérique thermoplastique comprenant une polyéthercétonecétone (PEKK), dans laquelle sont dispersés des nanotubes multiparois.

2. Fibre composite selon la revendication 1, **caractérisée en ce que** les nanotubes multiparois contiennent, notamment sont constitués, de carbone, de nitrure de carbone, de nitrure de bore, de carbure de bore, de phosphure de bore, de nitrure de phosphore, de boronitrure de carbone, de silicum ou de tungstène.

3. Fibre composite selon la revendication 2, **caractérisée en ce que** les nanotubes multiparois sont des nanotubes multiparois de carbone.

4. Fibre composite selon l'une quelconque des revendications 1 à 3, **caractérisée en ce que** les nanotubes multiparois représentent de 0,1 à 50% en poids et de préférence de 1 à 10% en poids, par rapport au poids de la fibre.

5. Fibre composite selon l'une quelconque des revendications 1 à 4, **caractérisée en ce que** le PEKK est amorphe.

6. Fibre composite selon l'une quelconque des revendications 1 à 5, **caractérisée en ce que** le PEKK présente une température de transition vitreuse (Tg) comprise entre 150 et 170°C (bornes incluses).

7. Utilisation d'une fibre composite selon l'une quelconque des revendications 1 à 6 pour la fabrication de nez, d'ailes ou de carlingues de fusées ou d'avions ; d'armures de flexible off-shore ; d'éléments de carrosserie automobile ou de châssis moteur ; d'emballages et de textiles antistatiques ; de dispositifs de blindage électromagnétique, notamment pour la protection de composants électroniques ; de textiles chauffants ; de câbles conducteurs; de capteurs, notamment de capteurs de déformation ou de contraintes mécaniques ; ou de dispositifs biomédicaux tels que des fils de suture ou des cathéters.

8. Procédé de fabrication d'une fibre composite selon l'une quelconque des revendications 1 à 6, comprenant les étapes successives consistant à :
(a) disperser les nanotubes multiparois, éventuellement sous forme de mélange-maître dans une partie de la matrice polymère, dans tout ou l'autre partie de la matrice polymère, pour obtenir un mélange composite,
(b) transformer ledit mélange composite en fibres, de préférence suivant un procédé de filage par voie fondue.

9. Procédé selon la revendication 8, **caractérisé en ce qu'**il comprend une étape supplémentaire (c) consistant à étirer les fibres obtenues, à une température supérieure à la température de transition vitreuse du PEKK et de préférence inférieure à sa température de fusion.

## Patentansprüche

1. Verbundfaser, die insbesondere leitfähig ist, bestehend aus einer thermoplastischen Polymermatrix, die ein Polyetherketonketon (PEKK) umfasst, in der mehrlagige Nanoröhrchen dispergiert sind.

2. Verbundfaser nach Anspruch 1, **dadurch gekennzeichnet, dass** die mehrlagigen Nanoröhrchen Kohlenstoff, Kohlenstoffnitrid, Bornitrid, Borcarbid, Borphosphid, Phosphornitrid, Kohlenstoffbornitrid, Silizium oder Wolfram enthalten, insbesondere daraus bestehen.

3. Verbundfaser nach Anspruch 2, **dadurch gekennzeichnet, dass** die mehrlagigen Nanoröhrchen mehrlagige Kohlenstoff-Nanoröhrchen sind.

4. Verbundfaser nach einem der Ansprüche 1 bis 3, **dadurch gekennzeichnet, dass** die mehrlagigen Nanoröhrchen 0,1 bis 50 Gew.-% und vorzugsweise 1 bis 10 Gew.-%, bezogen auf das Gewicht der Faser, ausmachen.

5. Verbundfaser nach einem der Ansprüche 1 bis 4, **dadurch gekennzeichnet, dass** das PEKK amorph ist.

6. Verbundfaser nach einem der Ansprüche 1 bis 5, **dadurch gekennzeichnet, dass** das PEKK eine Glasübergangstemperatur (Tg) zwischen 150 und 170°C (einschließlich der Grenzen) aufweist.

7. Verwendung einer Verbundfaser nach einem der Ansprüche 1 bis 6 zur Herstellung von Bugspitzen, Flügeln oder Rümpfen von Raketen oder Flugzeugen; Bewehrungen für flexible Offshore-Leitung; Automobilkarosserie- oder Motorrahmenbestandteilen; antistatischen Verpackungen und Textilien; elektromagnetischen Abschirmvorrichtungen, insbesondere zum Schutz elektronischer Bauteile; heizbaren Geweben; leitenden Kabeln; Sensoren, insbesondere Verformungs- oder mechanische Beanspruchungssensoren; oder biomedizinischen Vorrichtungen, wie Nahtfäden oder Katheter.

8. Verfahren zur Herstellung einer Verbundfaser nach einem der Ansprüche 1 bis 6, das die folgenden aufeinanderfolgenden Schritte umfasst:
(a) Dispergieren der mehrlagigen Nanoröhrchen, gegebenenfalls in Form einer Vormischung in einem Teil der Polymermatrix, in der gesamten oder dem anderen Teil der Polymermatrix, um ein Verbundgemisch zu erhalten,
(b) Umwandeln des Verbundgemischs in Fasern, vorzugsweise gemäß einem Schmelzspinnverfahren.

9. Verfahren nach Anspruch 8, **dadurch gekennzeichnet, dass** es einen zusätzlichen Schritt (c) umfasst, in dem die erhaltenen Fasern bei einer Temperatur über der Glasübergangstemperatur des PEKK und vorzugsweise unterhalb von dessen Schmelzpunkt gestreckt werden.

## Claims

1. Composite fibre, especially a conducting one, consisting of a thermoplastic polymeric matrix comprising a polyetherketoneketone (PEKK) in which multi-walled nanotubes are dispersed.

2. Composite fibre according to Claim 1, **characterized in that** the multi-walled nanotubes contain, especially consist of, carbon, carbon nitride, boron nitride, boron carbide, boron phosphide, phosphorus nitride, carbon boronitride, silicon or tungsten.

3. Composite fibre according to Claim 2, **characterized in that** the multi-walled nanotubes are multi-walled carbon nanotubes.

4. Composite fibre according to any one of Claims 1 to 3, **characterized in that** the multi-walled nanotubes represent from 0.1 to 50% by weight, and preferably from 1 to 10% by weight, relative to the weight of the fibre.

5. Composite fibre according to any one of Claims 1 to 4, **characterized in that** the PEKK is amorphous.

6. Composite fibre according to any one of Claims 1 to 5, **characterized in that** the PEKK has a glass transition temperature (T_{g}) of between 150 and 170°C (limits inclusive).

7. Use of a composite fibre according to any one of Claims 1 to 6, for the manufacture of: nosecones, wings or fuselages of rockets or aircraft; off-shore flexible pipe reinforcements; automobile body or engine chassis components; antistatic packages and textiles; electromagnetic shielding devices, especially for the protection of electronic components; heated fabrics; conducting cables; sensors, especially mechanical strain or stress sensors; or biomedical devices, such as sutures or catheters.

8. Process for manufacturing a composite fibre according to any one of Claims 1 to 6, comprising the successive steps consisting in:
(a) dispersing the multi-walled nanotubes, optionally in the form of a masterbatch in part of the polymer matrix, into all or the other part of the polymer matrix in order to obtain a composite blend; and
(b) converting said composite blend into fibres, preferably using a melt spinning process.

9. Process according to Claim 8, **characterized in that** it includes an additional step (c) consisting in drawing the resulting fibres at a temperature above the glass transition temperature of the PEKK and preferably below its melting point.
